# EUROPEAN PATENT APPLICATION

(11) **EP 4 580 293 A1**
(43) Date of publication of application: **02.07.2025**
(21) Application number: 23886118.1
(22) Date of filing: 24.10.2023
(51) Int. Cl.: H04W 72/25, H04W 72/04, H04W 74/08, H04W 4/40, H04W 92/18, H04L 5/00, H04W 76/14

(54) **METHOD AND APPARATUS FOR SIDELINK COMMUNICATION BASED ON START POSITIONS IN UNLICENSED BAND**

(30) Priority: 02.11.2022 KR 20220144659; 03.02.2023 KR 20230014716
(71) Applicant: Hyundai Motor Company, Seoul 06797 (KR); Kia Corporation, Seoul 06797 (KR)
(72) Inventor: HONG, Ui Hyun, Hwaseong-si, Gyeonggi-do 18280 (KR)
(74) Representative: Isarpatent
(86) International application number: PCT/KR2023/016530
(87) International publication number: WO 2024/096422

(57) **Abstract**

A method and an apparatus for sidelink communication based on start positions in an unlicensed band are disclosed. The method of a first UE comprises the steps of: receiving configuration information about a start symbol from a base station; identifying a plurality of start symbols on the basis of the configuration information; performing a first LBT operation at a first start symbol from among the plurality of start symbols in a first slot; and, if the first LBT operation at the first start symbol fails, performing a second LBT operation at a second start symbol from among the plurality of start symbols in the first slot.

## Description

### [Technical Field]

The present disclosure relates to a sidelink communication technique, and more particularly, to a sidelink communication technique based on a plurality of start positions.

### [Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, in order to enhance sidelink communication, carrier aggregation (CA) operations, unlicensed band operations, FR2 band operations, and/or operations for coexistence between LTE and NR may be considered. In particular, when sidelink communication is performed in an unlicensed band, methods to support the sidelink communication may be required. For operations in the unlicensed band, optimization of sidelink physical channel structures may be required. Additionally, improvement of listen before talk (LBT) operations for sidelink communication in an unlicensed band may be required.

### [Disclosure]

### [Technical Problem]

The present disclosure is directed to providing a method and an apparatus for sidelink communication based on a plurality of start positions in an unlicensed band.

### [Technical Solution]

A method of a first user equipment (UE), according to exemplary embodiments of the present disclosure for achieving the above-described objective, may comprise: receiving configuration information of start symbol(s) from a base station; identifying a plurality of start symbols based on the configuration information; performing a first listen before talk (LBT) operation in a first start symbol among the plurality of start symbols within a first slot; and performing a second LBT operation in a second start symbol among the plurality of start symbols within the first slot, based on a failure of the first LBT operation in the first start symbol, wherein each of the first LBT operation and the second LBT operation may be performed for sidelink (SL) transmission to a second UE, and the second start symbol may be located after the first start symbol in time domain.

Within the first slot, the second start symbol may be configured as a symbol other than a physical sidelink shared channel (PSSCH) demodulation reference signal (DMRS) symbol, and the PSSCH DMRS symbol may be a symbol in which a DMRS for demodulation of a PSSCH is transmitted.

Within the first slot, the second start symbol may be configured as a symbol before or after the PSSCH DMRS symbol.

Within the first slot, the second start symbol may be configured as a PSSCH DMRS symbol.

Within the first slot, PSSCH DMRS symbol(s) may be configured considering at least one of a number or positions of the plurality of start symbols.

When the second LBT operation is successful, the SL transmission may be performed within the first slot, and when the second LBT operation fails, the SL transmission may be performed in a second slot after the first slot.

A copy of data to be transmitted in a next symbol of the second start symbol may be transmitted in the second start symbol.

The configuration information may include information indicating a position of the first start symbol and information indicating a position of the second start symbol.

The information indicating the position of the second start symbol may be a symbol offset between the first start symbol and the second start symbol.

When a use of the plurality of start symbols is enabled, the second LBT operation may be performed in the second start symbol, and when the use of the plurality of start symbols is disabled, the second LBT operation may not be performed in the second start symbol.

A method of a second user equipment (UE), according to exemplary embodiments of the present disclosure for achieving the above-described objective, may comprise: receiving configuration information of start symbol(s) from a base station; identifying a plurality of start symbols based on the configuration information; performing a first monitoring operation for sidelink (SL) transmission of a first UE according to a first listen before talk (LBT) operation in a first start symbol among the plurality of start symbols within a first slot; and in response to a reception failure of the SL transmission according to the first LBT operation, performing a second monitoring operation for the SL transmission of the first UE according to a second LBT operation in a second start symbol among the plurality of start symbols within the first slot, wherein the second start symbol may be located after the first start symbol in time domain.

Within the first slot, the second start symbol may be configured as a symbol other than a physical sidelink shared channel (PSSCH) demodulation reference signal (DMRS) symbol, and the PSSCH DMRS symbol may be a symbol in which a DMRS for demodulation of a PSSCH is transmitted.

Within the first slot, the second start symbol may be configured as a symbol before or after the PSSCH DMRS symbol.

Within the first slot, the second start symbol may be configured as a PSSCH DMRS symbol.

Within the first slot, PSSCH DMRS symbol(s) may be configured considering at least one of a number or positions of the plurality of start symbols.

When reception of the SL transmission according to the second LBT operation fails, the second UE may not expect to receive the SL transmission in the first slot, and the SL transmission may be delayed to a second slot after the first slot.

A copy of data to be received in a next symbol of the second start symbol may be received in the second start symbol.

The configuration information may include information indicating a position of the first start symbol and information indicating a position of the second start symbol.

The information indicating the position of the second start symbol may be a symbol offset between the first start symbol and the second start symbol.

When a use of the plurality of start symbols is enabled, the second LBT operation may be performed in the second start symbol, and when the use of the plurality of start symbols is disabled, the second LBT operation may not be performed in the second start symbol.

### [Advantageous Effects]

According to the present disclosure, multiple start symbols may be configured for terminals for sidelink-unlicensed (SL-U) communication. A transmitting terminal may perform an LBT operation in an initial start symbol. If the LBT operation fails in the initial start symbol, the transmitting terminal may perform an LBT operation in an additional start symbol. If the LBT operation is successful, the transmitting terminal may perform SL transmission. Since multiple start symbols can be configured within a single slot, delay in SL transmission can be prevented, and the performance of SL-U communication can be improved.

### [Description of Drawings]

FIG. 1 is a conceptual diagram illustrating scenarios of Vehicle-to-Everything (V2X) communications.
FIG. 2 is a conceptual diagram illustrating a first exemplary embodiment of a communication system.
FIG. 3 is a conceptual diagram illustrating a first exemplary embodiment of a communication node constituting a communication system.
FIG. 4 is a block diagram illustrating a first exemplary embodiment of communication nodes performing communication.
FIG. 5A is a block diagram illustrating a first exemplary embodiment of a transmission path.
FIG. 5B is a block diagram illustrating a first exemplary embodiment of a reception path.
FIG. 6 is a block diagram illustrating a first exemplary embodiment of a user plane protocol stack of a UE performing sidelink communication.
FIG. 7 is a block diagram illustrating a first exemplary embodiment of a control plane protocol stack of a UE performing sidelink communication.
FIG. 8 is a block diagram illustrating a second exemplary embodiment of a control plane protocol stack of a UE performing sidelink communication.
FIG. 9 is a timing diagram illustrating a first exemplary embodiment of a communication method in an unlicensed band.
FIG. 10 is a conceptual diagram illustrating a first exemplary embodiment of an LBT operation in SL-U communication.
FIG. 11 is a conceptual diagram illustrating a second exemplary embodiment of LBT operation in SL-U communication.
FIG. 12 is a conceptual diagram illustrating a third exemplary embodiment of LBT operation in SL-U communication.
FIG. 13 is a conceptual diagram illustrating a fourth exemplary embodiment of LBT operation in SL-U communication.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

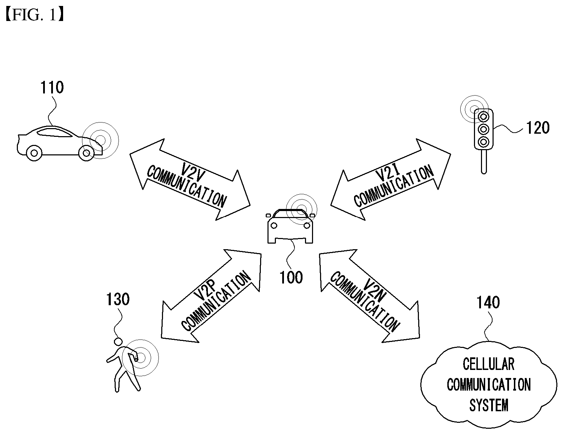

FIG. 1 is a conceptual diagram illustrating scenarios of Vehicle-to-Everything (V2X) communications.

As shown in FIG. 1, V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a communication system (e.g., communication network) 140, and the V2X communications supported by the communication system 140 may be referred to as 'Cellular-V2X (C-V2X) communications'. Here, the communication system 140 may include the 4G communication system (e.g., LTE communication system or LTE-A communication system), 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported by the communication system 140 may be performed based on sidelink communication technologies (e.g., Proximity Based Services (ProSe) and Device-to-Device (D2D) communication technologies, and the like). In this case, the communications between the vehicles 100 and 110 may be performed using at least one sidelink channel.

The V2I communications may include communications between the first vehicle 100 and an infrastructure (e.g., road side unit (RSU)) 120 located on a roadside. The infrastructure 120 may include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported by the communication system 140 may be performed based on sidelink communication technologies (e.g., ProSe and D2D communication technologies, and the like). In this case, the communications between the vehicle 100 and the infrastructure 120 may be performed using at least one sidelink channel.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported by the communication system 140 may be performed based on sidelink communication technologies (e.g., ProSe and D2D communication technologies, and the like). In this case, the communications between the communication node located in the vehicle 100 and the communication node carried by the person 130 may be performed using at least one sidelink channel.

The V2N communications may be communications between the first vehicle 100 (e.g., the communication node located in the vehicle 100) and the communication system (e.g., communication network) 140. The V2N communications may be performed based on the 4G communication technology (e.g., LTE or LTE-A specified as the 3GPP standards) or the 5G communication technology (e.g., NR specified as the 3GPP standards). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, a Wireless Personal Area Network (WPAN) communication technology defined in IEEE 802.15, or the like.

Meanwhile, the communication system 140 supporting the V2X communications may be configured as follows.

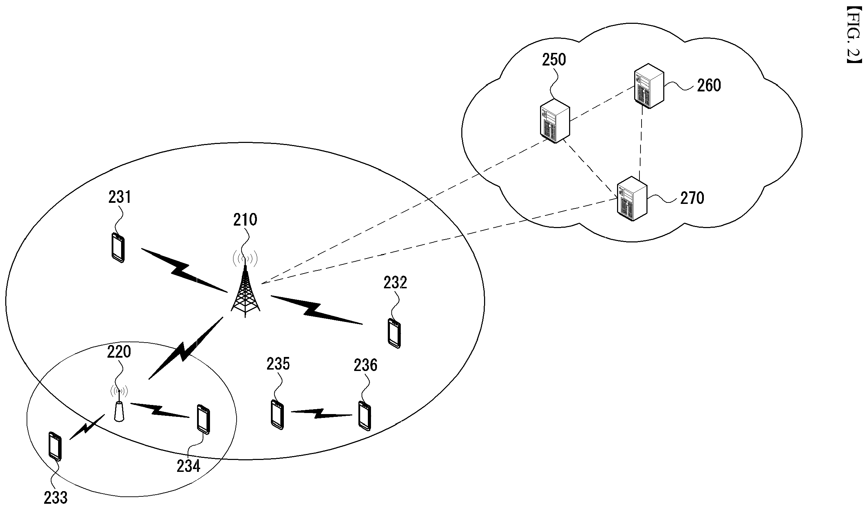

FIG. 2 is a conceptual diagram illustrating a first exemplary embodiment of a communication system.

As shown in FIG. 2, a communication system may include an access network, a core network, and the like. The access network may include a base station 210, a relay 220, user equipment (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the communication system supports the 4G communication technology, the core network may include a serving gateway (S-GW) 250, a packet data network (PDN) gateway (P-GW) 260, a mobility management entity (MME) 270, and the like.

When the communication system supports the 5G communication technology, the core network may include a user plane function (UPF) 250, a session management function (SMF) 260, an access and mobility management function (AMF) 270, and the like. Alternatively, when the communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slices configured in the core network.

The communication nodes (e.g., base station, relay, UE, S-GW, P-GW, MME, UPF, SMF, AMF, etc.) constituting the communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) constituting the communication system may be configured as follows.

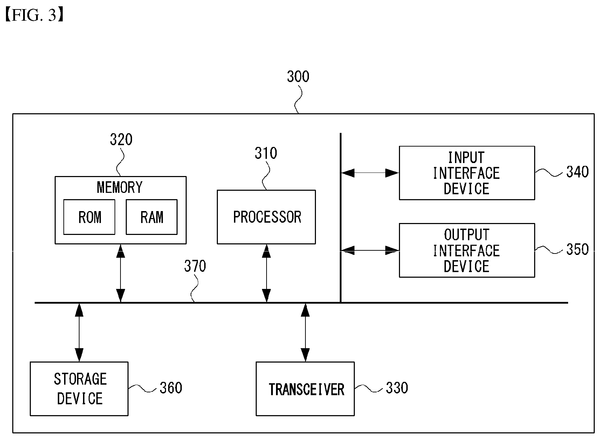

FIG. 3 is a conceptual diagram illustrating a first exemplary embodiment of a communication node constituting a communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one program command stored in at least one of the memory 320 and the storage device 360. The processor 310 may refer to a central processing unit (CPU), a graphics processing unit (GPU), or a dedicated processor on which methods in accordance with exemplary embodiments of the present disclosure are performed. Each of the memory 320 and the storage device 360 may include at least one of a volatile storage medium and a non-volatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to a cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input multiple-output (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), evolved Node B (eNB), base transceiver station (BTS), radio remote head (RRH), transmission reception point (TRP), radio unit (RU), roadside unit (RSU), radio transceiver, access point, access node, or the like. The relay 220 may be referred to as a small base station, relay node, or the like. Each of the UEs 231 through 236 may be referred to as a terminal, access terminal, mobile terminal, station, subscriber station, mobile station, portable subscriber station, node, device, on-broad unit (OBU), or the like.

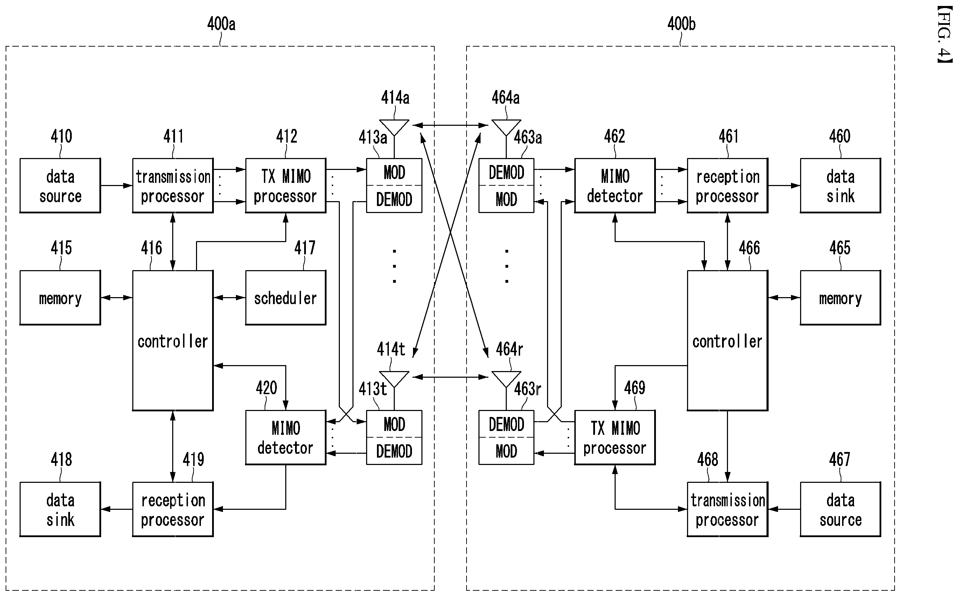

Meanwhile, communication nodes that perform communications in the communication network may be configured as follows. A communication node shown in FIG. 4 may be a specific exemplary embodiment of the communication node shown in FIG. 3.

FIG. 4 is a block diagram illustrating a first exemplary embodiment of communication nodes performing communication.

As shown in FIG. 4, each of a first communication node 400a and a second communication node 400b may be a base station or UE. The first communication node 400a may transmit a signal to the second communication node 400b. A transmission processor 411 included in the first communication node 400a may receive data (e.g., data unit) from a data source 410. The transmission processor 411 may receive control information from a controller 416. The control information may include at least one of system information, RRC configuration information (e.g., information configured by RRC signaling), MAC control information (e.g., MAC CE), or PHY control information (e.g., DCI, SCI).

The transmission processor 411 may generate data symbol(s) by performing processing operations (e.g., encoding operation, symbol mapping operation, etc.) on the data. The transmission processor 411 may generate control symbol(s) by performing processing operations (e.g., encoding operation, symbol mapping operation, etc.) on the control information. In addition, the transmission processor 411 may generate synchronization/reference symbol(s) for synchronization signals and/or reference signals.

A Tx MIMO processor 412 may perform spatial processing operations (e.g., precoding operations) on the data symbol(s), control symbol(s), and/or synchronization/reference symbol(s). An output (e.g., symbol stream) of the Tx MIMO processor 412 may be provided to modulators (MODs) included in transceivers 413a to 413t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 413a to 413t may be transmitted through antennas 414a to 414t.

The signals transmitted by the first communication node 400a may be received at antennas 464a to 464r of the second communication node 400b. The signals received at the antennas 464a to 464r may be provided to demodulators (DEMODs) included in transceivers 463a to 463r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 462 may perform MIMO detection operations on the symbols. A reception processor 461 may perform processing operations (e.g., de-interleaving operation, decoding operation, etc.) on the symbols. An output of the reception processor 461 may be provided to a data sink 460 and a controller 466. For example, the data may be provided to the data sink 460 and the control information may be provided to the controller 466.

On the other hand, the second communication node 400b may transmit signals to the first communication node 400a. A transmission processor 469 included in the second communication node 400b may receive data (e.g., data unit) from a data source 467 and perform processing operations on the data to generate data symbol(s). The transmission processor 468 may receive control information from the controller 466 and perform processing operations on the control information to generate control symbol(s). In addition, the transmission processor 468 may generate reference symbol(s) by performing processing operations on reference signals.

A Tx MIMO processor 469 may perform spatial processing operations (e.g., precoding operations) on the data symbol(s), control symbol(s), and/or reference symbol(s). An output (e.g., symbol stream) of the Tx MIMO processor 469 may be provided to modulators (MODs) included in the transceivers 463a to 463t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 463a to 463t may be transmitted through the antennas 464a to 464t.

The signals transmitted by the second communication node 400b may be received at the antennas 414a to 414r of the first communication node 400a. The signals received at the antennas 414a to 414r may be provided to demodulators (DEMODs) included in the transceivers 413a to 413r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 420 may perform a MIMO detection operation on the symbols. The reception processor 419 may perform processing operations (e.g., de-interleaving operation, decoding operation, etc.) on the symbols. An output of the reception processor 419 may be provided to a data sink 418 and the controller 416. For example, the data may be provided to the data sink 418 and the control information may be provided to the controller 416.

Memories 415 and 465 may store the data, control information, and/or program codes. A scheduler 417 may perform scheduling operations for communication. The processors 411, 412, 419, 461, 468, and 469 and the controllers 416 and 466 shown in FIG. 4 may be the processor 310 shown in FIG. 3, and may be used to perform methods described in the present disclosure.

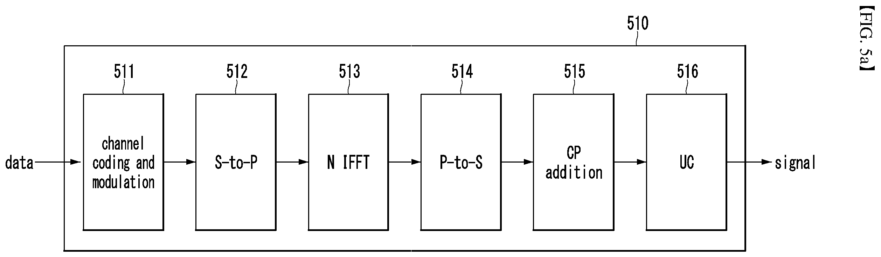

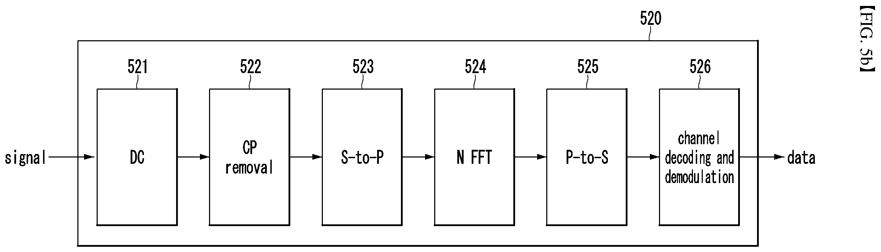

FIG. 5A is a block diagram illustrating a first exemplary embodiment of a transmission path, and FIG. 5B is a block diagram illustrating a first exemplary embodiment of a reception path.

As shown in FIGS. 5A and 5B, a transmission path 510 may be implemented in a communication node that transmits signals, and a reception path 520 may be implemented in a communication node that receives signals. The transmission path 510 may include a channel coding and modulation block 511, a serial-to-parallel (S-to-P) block 512, an N-point inverse fast Fourier transform (N-point IFFT) block 513, a parallel-to-serial (P-to-S) block 514, a cyclic prefix (CP) addition block 515, and up-converter (UC) 516. The reception path 520 may include a down-converter (DC) 521, a CP removal block 522, an S-to-P block 523, an N-point FFT block 524, a P-to-S block 525, and a channel decoding and demodulation block 526. Here, N may be a natural number.

In the transmission path 510, information bits may be input to the channel coding and modulation block 511. The channel coding and modulation block 511 may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block 511 may be a sequence of modulation symbols.

The S-to-P block 512 may convert frequency domain modulation symbols into parallel symbol streams to generate N parallel symbol streams. N may be the IFFT size or the FFT size. The N-point IFFT block 513 may generate time domain signals by performing an IFFT operation on the N parallel symbol streams. The P-to-S block 514 may convert the output (e.g., parallel signals) of the N-point IFFT block 513 to serial signals to generate the serial signals.

The CP addition block 515 may insert a CP into the signals. The UC 516 may up-convert a frequency of the output of the CP addition block 515 to a radio frequency (RF) frequency. Further, the output of the CP addition block 515 may be filtered in baseband before the up-conversion.

The signal transmitted from the transmission path 510 may be input to the reception path 520. Operations in the reception path 520 may be reverse operations for the operations in the transmission path 510. The DC 521 may down-convert a frequency of the received signals to a baseband frequency. The CP removal block 522 may remove a CP from the signals. The output of the CP removal block 522 may be serial signals. The S-to-P block 523 may convert the serial signals into parallel signals. The N-point FFT block 524 may generate N parallel signals by performing an FFT algorithm. The P-to-S block 525 may convert the parallel signals into a sequence of modulation symbols. The channel decoding and demodulation block 526 may perform a demodulation operation on the modulation symbols and may restore data by performing a decoding operation on a result of the demodulation operation.

In FIGS. 5A and 5B, discrete Fourier transform (DFT) and inverse DFT (IDFT) may be used instead of FFT and IFFT. Each of the blocks (e.g., components) in FIGS. 5A and 5B may be implemented by at least one of hardware, software, or firmware. For example, some blocks in FIGS. 5A and 5B may be implemented by software, and other blocks may be implemented by hardware or a combination of hardware and software. In FIGS. 5A and 5B, one block may be subdivided into a plurality of blocks, a plurality of blocks may be integrated into one block, some blocks may be omitted, and blocks supporting other functions may be added.

Meanwhile, communications between the UEs 235 and 236 may be performed based on sidelink communication technology (e.g., ProSe communication technology, D2D communication technology). The sidelink communication may be performed based on a one-to-one scheme or a one-to-many scheme. When V2V communication is performed using sidelink communication technology, the UE 235 may refer to a communication node located in the first vehicle 100 of FIG. 1, and the UE 236 may refer to a communication node located in the second vehicle 110 of FIG. 1. When V2I communication is performed using sidelink communication technology, the UE 235 may refer to a communication node located in the first vehicle 100 of FIG. 1, and the UE 236 may refer to a communication node located in the infrastructure 120 of FIG. 1. When V2P communication is performed using sidelink communication technology, the UE 235 may refer to a communication node located in the first vehicle 100 of FIG. 1, and the UE 236 may refer to a communication node carried by the person 130.

The scenarios to which the sidelink communications are applied may be classified as shown below in Table 1 according to the positions of the UEs (e.g., the UEs 235 and 236) participating in the sidelink communications. For example, the scenario for the sidelink communications between the UEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows.

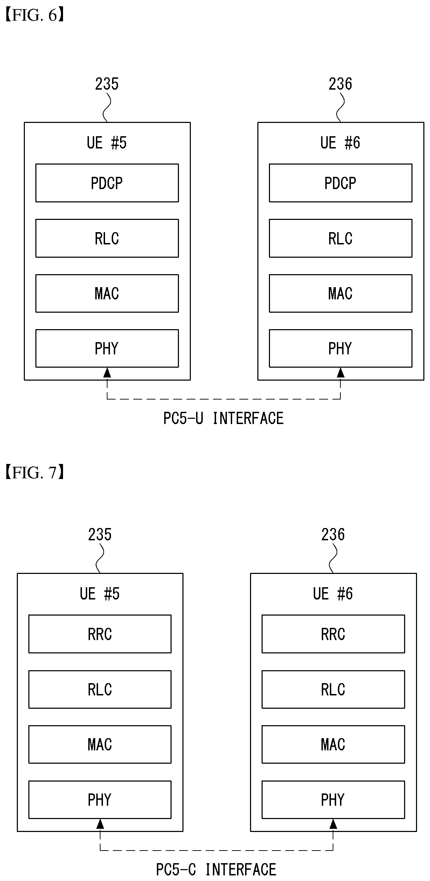

FIG. 6 is a block diagram illustrating a first exemplary embodiment of a user plane protocol stack of a UE performing sidelink communication.

As shown in FIG. 6, the UE 235 may be the UE 235 shown in FIG. 2 and the UE 236 may be the UE 236 shown in FIG. 2. The scenario for the sidelink communications between the UEs 235 and 236 may be one of the sidelink communication scenarios A to D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications. Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs 235 and 236) performing sidelink communications may be configured as follows.

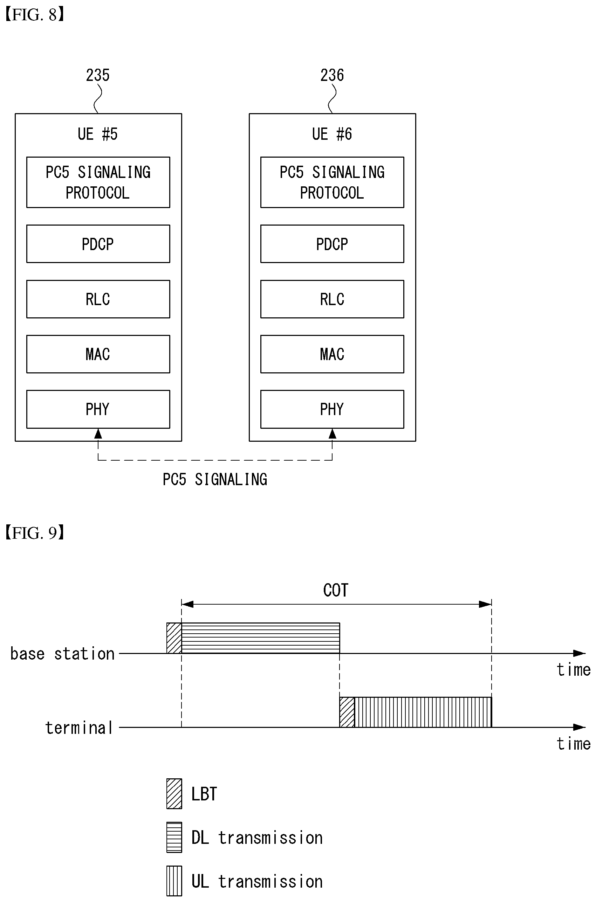

FIG. 7 is a block diagram illustrating a first exemplary embodiment of a control plane protocol stack of a UE performing sidelink communication, and FIG. 8 is a block diagram illustrating a second exemplary embodiment of a control plane protocol stack of a UE performing sidelink communication.

As shown in FIGS. 7 and 8, the UE 235 may be the UE 235 shown in FIG. 2 and the UE 236 may be the UE 236 shown in FIG. 2. The scenario for the sidelink communications between the UEs 235 and 236 may be one of the sidelink communication scenarios A to D of Table 1. The control plane protocol stack illustrated in FIG. 7 may be a control plane protocol stack for transmission and reception of broadcast information (e.g., Physical Sidelink Broadcast Channel (PSBCH)).

The control plane protocol stack shown in FIG. 7 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 8 may be a control plane protocol stack for one-to-one sidelink communication. The control plane protocol stack shown in FIG. 8 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., UE 235 or 236) by higher layer signaling. The PSCCH may be used for transmitting and receiving sidelink control information (SCI) and may also be configured in the UE (e.g., UE 235 or 236) by higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the UE (e.g., UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g., UE 235 or 236) within the resource pool configured by the dedicated RRC signaling procedure or the broadcast RRC signaling procedure.

Hereinafter, sidelink communication methods will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The base station may transmit system information (e.g., SIB12, SIB13, SIB14) and RRC messages including configuration information for sidelink communication (i.e., sidelink configuration information) to UE(s). The UE may receive the system information and RRC messages from the base station, identify the sidelink configuration information included in the system information and RRC messages, and perform sidelink communication based on the sidelink configuration information. The SIB12 may include sidelink communication/discovery configuration information. The SIB13 and SIB14 may include configuration information for V2X sidelink communication.

The sidelink communication may be performed within a SL bandwidth part (BWP). The base station may configure SL BWP(s) to the UE using higher layer signaling. The higher layer signaling may include *SL-BWP-Config* and/or *SL-BWP-ConfigCommon. SL-BWP-Config* may be used to configure a SL BWP for UE-specific sidelink communication. *SL-BWP-ConfigCommon* may be used to configure cell-specific configuration information.

Furthermore, the base station may configure resource pool(s) to the UE using higher layer signaling. The higher layer signaling may include *SL-BWP-PoolConfig, SL-BWP-PoolConfigCommon, SL-BWP-DiscPoolConfig,* and/or *SL-BWP-DiscPoolConfigCommon. SL-BWP-PoolConfig* may be used to configure a sidelink communication resource pool. *SL-BWP-PoolConfigCommon* may be used to configure a cell-specific sidelink communication resource pool. *SL-BWP-DiscPoolConfig* may be used to configure a resource pool dedicated to UE-specific sidelink discovery. *SL-BWP-DiscPoolConfigCommon* may be used to configure a resource pool dedicated to cell-specific sidelink discovery. The UE may perform sidelink communication within the resource pool configured by the base station.

The sidelink communication may support SL discontinuous reception (DRX) operations. The base station may transmit a higher layer message (e.g., *SL-DRX-Config*) including SL DRX-related parameter(s) to the UE. The UE may perform SL DRX operations based on *SL-DRX-Config* received from the base station. The sidelink communication may support inter-UE coordination operations. The base station may transmit a higher layer message (e.g., *SL-InterUE-CoordinationConfig*) including inter-UE coordination parameter(s) to the UE. The UE may perform inter-UE coordination operations based on *SL-InterUE-CoordinationConfig* received from the base station.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as 'first-stage SCI', and the 2nd-stage SCI may be referred to as 'second-stage SCI'. A format of the first-stage SCI may include a SCI format 1-A, and a format of the second-stage SCI may include a SCI format 2-A, a SCI format 2-B, and a SCI format 2-C.

The SCI format 1-A may be used for scheduling a PSSCH and second-stage SCI. The SCI format 1-A may include at least one among priority information, frequency resource assignment information, time resource assignment information, resource reservation period information, demodulation reference signal (DMRS) pattern information, second-stage SCI format information, beta_offset indicator, number of DMRS ports, modulation and coding scheme (MCS) information, additional MCS table indicator, PSFCH overhead indicator, or conflict information receiver flag.

The SCI format 2-A may be used for decoding of a PSSCH. The SCI format 2-A may include at least one among a HARQ processor number, new data indicator (NDI), redundancy version (RV), source ID, destination ID, HARQ feedback enable/disable indicator, cast type indicator, or CSI request.

The SCI format 2-B may be used for decoding of a PSSCH. The SCI format 2-B may include at least one among a HARQ processor number, NDI, RV, source ID, destination ID, HARQ feedback enable/disable indicator, zone ID, or communication range requirement.

The SCI format 2-C may be used for decoding of a PSSCH. In addition, the SCI format 2-C may be used to provide or request inter-UE coordination information. The SCI format 2-C may include at least one among a HARQ processor number, NDI, RV, source ID, destination ID, HARQ feedback enable/disable indicator, CSI request, or providing/requesting indicator.

When a value of the providing/requesting indicator is set to 0, this may indicate that the SCI format 2-C is used to provide inter-UE coordination information. In this case, the SCI format 2-C may include at least one among resource combinations, first resource location, reference slot location, resource set type, or lowest subchannel indexes.

When a value of the providing/requesting indicator is set to 1, this may indicate that the SCI format 2-C is used to request inter-UE coordination information. In this case, the SCI format 2-C may include at least one among a priority, number of subchannels, resource reservation period, resource selection window location, resource set type, or padding bit(s).

Meanwhile, sidelink communication may be performed in a licensed band and/or an unlicensed band. Sidelink communication performed in an unlicensed band may be referred to as sidelink-unlicensed band (SL-U) communication or unlicensed band-sidelink (U-SL) communication. In SL-U communication, a first terminal may communicate with a second terminal according to a mode 1 or mode 2. When the mode 1 is used, the first terminal may communicate with the second terminal based on scheduling by a base station. When the mode 2 is used, the first terminal may communicate with the second terminal without scheduling by a base station. The mode 1 may correspond to the sidelink TM #1 or #3 disclosed in Table 2 above. The mode 2 may correspond to the sidelink TM #2 or #4 disclosed in Table 2 above.

FIG. 9 is a timing diagram illustrating a first exemplary embodiment of a communication method in an unlicensed band.

As shown in FIG. 9, a base station may perform a listen-before-talk (LBT) operation to perform downlink (DL) transmission, and if a result of the LBT operation indicates an idle state (e.g., clean state) of a channel, the base station may perform DL transmission. A terminal may perform an LBT operation to perform uplink (UL) transmission, and if a result of the LBT operation indicates an idle state of a channel, the terminal may perform UL transmission. If the result of the LBT operation indicates a busy state of the channel, the DL transmission and/or UL transmission may not be performed. The DL transmission and/or UL transmission may be performed within a channel occupancy time (COT). The COT may be initiated by the base station or terminal. The LBT operations may be performed based on one of categories disclosed in Table 3 below.

**[Table 3]**

| | **Description** |
|---|---|
| Category 1 (Cat 1 LBT) | The transmission operation is performed after a short switching gap of 16 *µs.* The CCA operation is not performed. |
| Category 2 (Cat 2 LBT) | The LBT operation is performed within a fixed CCA period (e.g., *25 µs*) without a random backoff operation. |
| Category 3 (Cat 3 LBT) | The LBT operation is performed based on a random backoff operation and a variable CCA period. The size of contention window is fixed. |
| Category 4 (Cat 4 LBT) | The LBT operation is performed based on a random backoff operation and a variable CCA period. The size of contention window is variable. |

The LBT operation may refer to a clear channel assessment (CCA) operation. The CCA operation may be performed during a CCA period. When the CCA operation is performed, the communication node (e.g., base station and/or terminal) may identify a channel state based on an energy detection (ED) scheme. In other words, the communication node may determine whether another signal exists in the channel. If an energy detected during the CCA period is less than a threshold (e.g., ED threshold), the communication node may determine the channel state as the idle state. In other words, the communication node may determine that no other signals exist in the channel. If the channel state is determined as the idle state, the communication node may access the channel within the COT. If the energy detected during the CCA period is equal to or above the threshold, the communication node may determine the channel state as the busy state. In other words, the communication node may determine that another signal exists in the channel. If the channel state is the busy state, the communication node may not access the channel within the COT.

In an unlicensed band, the communication node may perform the LBT operation and transmit data when a result of the LBT operation indicates the idle state of the channel. In this case, the base station may transmit a DL transmission burst within the COT, and the terminal may transmit a UL transmission burst within the COT. The COT may be configured within a maximum COT (MCOT). A slot duration of CCA may be 5 *µs* ~ 9 *µs.* The duration of the MCOT may be 8 ms. The base station may initiate and/or configure a COT based on a higher layer parameter SemiStaticChannelAccessConfig. *SemiStaticChannelAccessConfig* may include information on a period of the COT. The terminal may identify the COT initiated by the base station based on *SemiStaticChannelAccessConfig.*

The terminal may initiate and/or configure a COT based on a higher layer parameter *SemiStaticChannelAccessConfigUE. SemiStaticChannelAccessConfigUE* may include information on a period and an offset of the COT. The base station may identify the COT initiated by the terminal based on *SemiStaticChannelAccessConfigUE.*

The terminal may initiate and/or configure the COT based on *SemiStaticChannelAccessConfigUE* in the unlicensed band. As another method, the base station may signal *SemiStaticChannelAccessConfigSL-U* for a COT of SL-U communication to the terminal. The COT for SL-U communication may be referred to as a sidelink (SL)-COT. *SemiStaticChannelAccessConfigSL-U* may include information on a period and an offset of the SL-COT. The terminal may configure the SL-COT based on *SemiStaticChannelAccessConfig-U.* Other terminals may identify the COT initiated based on *SemiStaticChannelAccessConfigSL-U.*

In an unlicensed band, the terminal may perform an LBT operation before SL communication (e.g., transmission of SL data) in order to perform the SL communication. If the LBT operation succeeds, a COT may be initiated in the unlicensed band, and the SL communication may be performed within the COT. 'The LBT operation succeeds' may mean that a result of the LBT operation indicates an idle state.

In an unlicensed band, a channel access procedure may be classified into a DL channel access procedure and a UL channel access procedure. The DL channel access procedure may be classified into a Type 1 DL channel access procedure and a Type 2 DL channel access procedure. The Type 1 DL channel access procedure may be performed for initiation of a COT. The Type 2 DL channel access procedure may be performed for transmission within a COT (e.g., shared COT). The channel access procedure may refer to an LBT operation. The Type 1 DL channel access procedure may be performed for at least one of physical downlink shared channel (PDSCH) transmission, physical downlink control channel (PDCCH) transmission, or enhanced PDCCH (EPDCCH) transmission initiated by an eNB and/or any transmission initiated by a gNB. The eNB may refer to a base station in a 4G communication system, and the gNB may refer to a base station in a 5G communication system.

The Type 2 DL channel access procedure may be performed for at least one of discovery burst transmission or transmission not including a PDSCH initiated by an eNB and/or discovery burst transmission or discovery transmission multiplexed with non-unicast information initiated by a gNB. The Type 2 DL channel access procedure may be classified into a Type 2A DL channel access procedure, a Type 2B DL channel access procedure, and a Type 2C DL channel access procedure. The lengths of sensing periods (e.g., sensing intervals) in the Type 2A DL channel access procedure, Type 2B DL channel access procedure, and Type 2C DL channel access procedure may be different. The length of the sensing period in the Type 2A DL channel access procedure may be 25 µs. The length of the sensing period in the Type 2B DL channel access procedure may be 16 µs. Sensing operations may not be performed in the Type 2C DL channel access procedure.

The UL channel access procedure may be classified into a Type 1 UL channel access procedure and a Type 2 UL channel access procedure. The Type 1 UL channel access procedure may be performed for initiation of a COT. The Type 2 UL channel access procedure may be performed for transmission within a COT (e.g., shared COT). The Type 1 UL channel access procedure may be performed for at least one of physical uplink shared channel (PUSCH) transmission or sounding reference signal (SRS) transmission scheduled or configured by an eNB, at least one of PUSCH transmission or SRS transmission scheduled or configured by a gNB, PUCCH transmission scheduled or configured by a gNB, and/or transmission related to a random access (RA) procedure.

The Type 2 UL channel access procedure may be classified into a Type 2A UL channel access procedure, a Type 2B UL channel access procedure, and a Type 2C UL channel access procedure. The lengths of sensing periods for the Type 2A UL channel access procedure and Type 2B UL channel access procedure may be different. The length of the sensing period in the Type 2A UL channel access procedure may be 25 µs. The length of the sensing period in the Type 2B UL channel access procedure may be 16 µs. Sensing operations may not be performed in the Type 2C UL channel access procedure.

The Type 1 DL channel access procedure, Type 2 DL channel access procedure, Type 1 UL channel access procedure, and/or Type 2 UL channel access procedure may be used for SL-U communication. In this case, in description on the Type 1 DL channel access procedure, Type 2 DL channel access procedure, Type 1 UL channel access procedure, and/or Type 2 UL channel access procedure, a downlink channel and/or uplink channel may be interpreted as a sidelink channel. The LBT operation may be interpreted as the Type 1 DL channel access procedure, Type 2 DL channel access procedure, new Type DL channel access procedure, Type 1 UL channel access procedure, Type 2 UL channel access procedure, and/or new Type UL channel access procedure.

In SL-U communication, a communication node (e.g., base station, terminal) may perform an LBT operation before transmission. An automatic gain control (AGC) operation may be required for transmission and reception of SL data. The first symbol of a slot N may be used for the AGC operation. Therefore, the LBT operation may be performed before the start of the AGC operation in SL-U communication. The symbol used for the AGC operation may be referred to as an AGC symbol. The communication node may perform transmission (e.g., data transmission) after performing the LBT operation and AGC operation.

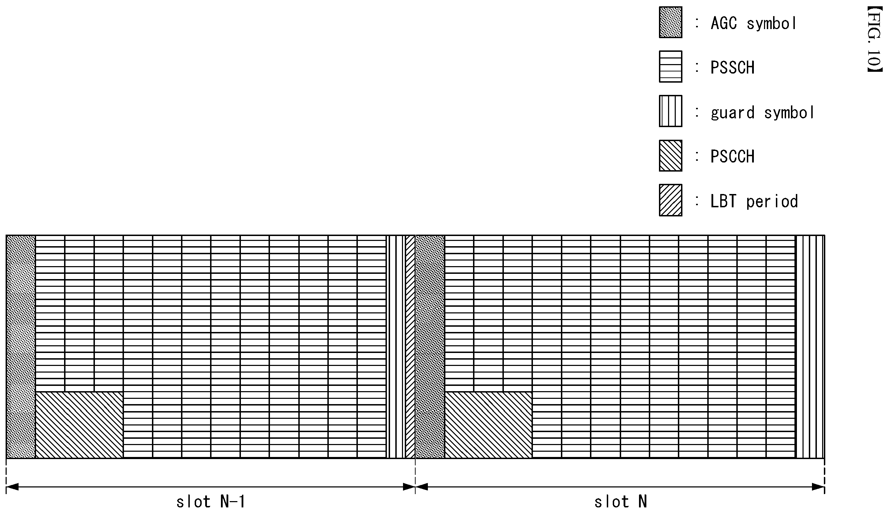

FIG. 10 is a conceptual diagram illustrating a first exemplary embodiment of an LBT operation in SL-U communication.

As shown in FIG. 10, the LBT operation may be performed before the start of the AGC operation. The LBT operation may be performed in the last symbol (e.g., guard symbol) of a slot N-1 or performed in the last symbol of the slot N-1 and the first symbol (e.g., AGC symbol) of the slot N. The communication node may perform transmission (e.g., data transmission) after performing the LBT operation and AGC operation. In exemplary embodiment(s) of the present disclosure, the LBT operation may be assumed to be performed in the manner illustrated in FIG. 10. Alternatively, the LBT operation may be assumed to be performed in a manner other than the manner illustrated in FIG. 10.

When a subcarrier spacing (SCS) is 15 kHz, an LBT period may be configured within a single symbol in consideration of a CCA slot duration. The LBT period may be a period in which the LBT operation is performed. The length of one slot may be 71.4 µs. When a different SCS is used, the same or a similar method may be applied. When an SCS is large, the LBT period may be configured within two or more symbols to secure the CCA slot duration.

In the exemplary embodiment of FIG. 10, when the LBT operation for SL communication fails in the slot N, the terminal may not perform SL communication (e.g., SL transmission) in the slot N. In this case, the terminal may perform an LBT operation in the last symbol of the slot N and/or an AGC symbol of the next slot N+1 of the slot N, and when the LBT operation succeeds, the terminal may perform SL communication in the slot N+1. The last symbol of the slot N and/or the AGC symbol of the next slot of the slot N, in which the LBT operation is performed, may be an LBT period. When the LBT operation fails in the LBT period for SL communication in the slot N, the terminal may not perform SL communication until an LBT operation succeeds in the next LBT period (e.g., LBT period for SL communication in the slot N+1). In this case, SL communication may experience a delay of one slot.

To prevent the delay of SL communication, one or more start positions in which an LBT operation is performed may be configured within a slot. The start position may refer to a start point. The terminal may perform an LBT operation in each of the one or more start positions within a slot. For example, the terminal may perform an LBT operation in the first start position within a slot (e.g., the first start symbol corresponding to the first start position). When the LBT operation fails in the first start position, the terminal may perform an LBT operation in the second start position within the slot (e.g., the second start symbol corresponding to the second start position). When the LBT operation succeeds, the terminal may perform an AGC operation and then perform SL communication. When multiple start positions (e.g., multiple start symbols) are configured within a slot, the AGC operation may be performed not only in the first symbol within the slot but also in other symbol(s). The number of other symbol(s) in which the AGC operation is performed within the slot may be one or more.

Multiple start positions may be configured within one slot. The first symbol within the slot may be a start position, and one or more symbols after the first symbol within the slot may be configured as start positions. When two start positions exist within one slot, the first symbol within one slot may be a start position, and the remaining start position (e.g., additional start position) within the one slot may be configured as a certain symbol after the first symbol. The certain symbol configured as the additional start position within the one slot may be as follows. The additional start position may refer to an additional start symbol.
- One of the second to the thirteenth symbols within the slot may be configured as the additional start position for LBT operation.
- The n-th symbol within the slot may be configured as the additional start position for LBT operation. n may be a natural number equal to or greater than 2.
- A symbol before m symbols from a PSSCH symbol (e.g., a starting PSSCH symbol) within the slot may be configured as the additional start position for LBT operation. The PSSCH symbol may refer to a symbol in which PSSCH transmission is performed. m may be a natural number.
- A symbol after 1 symbols from a PSCCH transmission (e.g., an ending PSCCH symbol) within the slot may be configured as the additional start position for LBT operation. The PSCCH symbol may refer to a symbol in which PSCCH transmission is performed. 1 may be a natural number.
- A PSSCH DMRS symbol within the slot may be configured as the additional start position for LBT operation. The PSSCH DMRS symbol may refer to a symbol in which a DMRS for demodulation and/or decoding of a PSSCH is transmitted.

When the additional start position within the slot is configurable at any symbol after the first symbol, a receiving terminal may perform an AGC operation in each symbol to receive an SL channel/signal from a transmitting terminal, and the receiving terminal may perform a blind decoding operation for PSCCH detection after one or two symbols from an end time (e.g., AGC symbol) of the AGC operation. In this situation, a load and/or complexity of the receiving terminal may increase. Therefore, in SL-U communication, it may be preferable for additional start position(s) to be dynamically indicated to the terminal(s). As another method, in SL-U communication, it may be preferable for additional start position(s) to be preconfigured for the terminal(s). For example, the additional start position(s) may be preconfigured for the terminal(s) based on a PSSCH DMRS symbol.

The position(s) of the PSSCH DMRS in the time domain (e.g., PSSCH DMRS symbol(s)) may be defined as shown in Table 4. Referring to Table 4, the length *l_{d}* of a scheduled resource may mean the number of scheduled symbols. In other words, the length *l_{d}* of the scheduled resource may mean the number of symbols included in a PSSCH (e.g., PSSCH duration) in the time domain. The minimum number of symbols required for SL data transmission may be six symbols. The six symbols may include at least an AGC symbol. In other words, the PSSCH (e.g., PSSCH duration) may include at least an AGC symbol (e.g., the first symbol of a slot). The additional start position(s) (e.g., additional start point(s)) within the slot may be configured based on the PSSCH DMRS symbol.

**[Table 4]**

| Length of scheduled resource (*l_{d}*) | PSSCH DM-RS position | | | | | |
|---|---|---|---|---|---|---|
| | PSCCH duration: 2 symbols | | | PSCCH duration: 3 symbols | | |
| | Number of PSSCH DM-RSs | | | Number of PSSCH DM-RSs | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

### [Method 1: Additional start position(s) may be configured in symbol(s) other than PSSCH DMRS symbols]

When four PSSCH DMRS symbols are configured within a slot, additional start position(s) may be configured as symbol(s) before and/or after the second PSSCH DMRS symbol. As another method, when four PSSCH DMRS symbols are configured within a slot, additional start position(s) may be configured as symbol(s) before and/or after the third PSSCH DMRS symbol.

When four PSSCH DMRS symbols are configured within a slot and additional start position(s) are configured based on the first PSSCH DMRS symbol, a time interval between the start positions (e.g., the first start position and the additional start position) may be short. When the time interval between the start positions is short, the terminal may not be able to perform an LBT operation in the second start position (e.g., additional start position) if an LBT operation fails in the first start position. In this case, SL communication may experience a delay of one slot.

When four PSSCH DMRS symbols are configured within a slot and additional start position(s) are configured based on the last PSSCH DMRS symbol, the length of a period from the additional start position to an end time of the slot may be short. In this case, a resource and/or processing time for PSCCH/PSSCH transmission after an LBT operation succeeds in the additional start position may be insufficient. The PSCCH/PSSCH transmission may refer to PSCCH transmission and/or PSSCH transmission.

Considering the above-described issues, it may be preferable for additional start position(s) to be configured based on the remaining PSSCH DMRS symbol(s) other than the first PSSCH DMRS symbol and the last PSSCH DMRS symbol. When four PSSCH DMRS symbols are configured within a slot, the remaining PSSCH DMRS symbol(s) used as a reference for configuring additional start position(s) may be the second PSSCH DMRS symbol and/or the third PSSCH DMRS symbol. The additional start position(s) may be configured as symbol(s) before and/or after the second PSSCH DMRS symbol and/or symbol(s) before and/or after the third PSSCH DMRS symbol.

When three PSSCH DMRS symbols are configured within a slot and additional start position(s) are configured based on the first PSSCH DMRS symbol, a time interval between the start positions (e.g., the first start position and the additional start position) may be short. When the time interval between the start positions is short, the terminal may not be able to perform an LBT operation in the second start position (e.g., additional start position) if an LBT operation fails in the first start position. In this case, SL communication may experience a delay of one slot.

When three PSSCH DMRS symbols are configured within a slot and additional start position(s) are configured based on the last PSSCH DMRS symbol, the length of a period from the additional start position to an end time of the slot may be short. In this case, a resource and/or processing time for PSCCH/PSSCH transmission after an LBT operation succeeds in the additional start position may be insufficient.

Considering the above-described issues, it may be preferable to configure additional start position(s) based on the remaining PSSCH DMRS symbol(s), excluding the first PSSCH DMRS symbol and the last PSSCH DMRS symbol, among the PSSCH DMRS symbols. When three PSSCH DMRS symbols are configured within a slot, the remaining PSSCH DMRS symbol(s), which serve as the basis for configuring additional start position(s), may be the second PSSCH DMRS symbol. The additional start position(s) may be configured as symbol(s) before and/or after the second PSSCH DMRS symbol.

When two PSSCH DMRS symbols are configured within a slot, the PSSCH DMRS symbol may be positioned in the front or rear symbol within the PSSCH duration. In this case, it may be difficult to configure additional start position(s). Therefore, when two PSSCH DMRS symbols are configured within a slot, only one start position may be configured, and the one start position may be the first symbol within the slot or a symbol after the first symbol.

Considering the above-described situation, it may be preferable to configure three or four PSSCH DMRS symbols in SL-U communication. The base station may transmit *sl-PSSCH-DMRS-TimePatternList* indicating the configuration of three or four PSSCH DMRS symbols to terminal(s). The terminal(s) may determine that three or four PSSCH DMRS symbols are configured within a slot based on the *sl-PSSCH-DMRS-TimePatternList* received from the base station. The base station may transmit information elements defined in Table 5 to terminal(s) through signaling. The terminal(s) may determine additional start position(s) (e.g., additional start point(s)) based on the information elements received from the base station. Alternatively, a transmitting terminal may transmit information elements defined in Table 5 to receiving terminal(s) through signaling. The receiving terminal(s) may determine additional start positions (e.g., start point(s)) based on the information elements received from the transmitting terminal.

**[Table 5]**

| | Description |
|---|---|
| Information element #1 | Information element #1 indicates enabling or disabling use of additional start position(s) (e.g., multiple start position(s)). |
| Information element #2 | Information element #2 indicates the number of additional start position(s). |
| Information element #3 | Information element #3 indicates symbol(s) (e.g., symbol index(es)) in which additional start position(s) are configured. |
| Information element #4 | Information element #4 indicates that additional start position(s) are configured in symbol(s) before and/or after the second PSSCH DMRS symbol. |
| Information element #5 | Information element #5 indicates that additional start position(s) are configured in symbol(s) before and/or after the third PSSCH DMRS symbol. |
| Information element #6 | Information element #6 indicates a PSSCH DMRS symbol (e.g., second PSSCH DMRS symbol and/or third PSSCH DMRS symbol), which serves as a basis for configuring additional start position(s). |
| Information element #7 | Information element #7 indicates a symbol offset. The terminal configures symbol(s) before or after the symbol offset from the PSSCH DMRS symbol indicated by the information element #6 as additional start position(s). |
| Information element #8 | Information element #8 indicates a symbol offset between an initial start symbol and an additional start symbol. When the terminal is aware of the position of the initial start symbol, the terminal identifies the position of the additional start symbol based on the position of the initial start symbol and the symbol offset. |

The information element(s) defined in Table 5 may be configuration information for start position(s) (e.g., additional start position(s)). The start position(s) may be configured for each SL bandwidth part (BWP). For example, start positions in a first BWP may be configured independently from start positions in a second SL BWP. The information elements defined in Table 5 may be transmitted by different communication nodes (e.g., base station and terminal). For example, the base station may transmit a signaling message including information elements #2, #3, #4, #5, #6, #7, and/or #8 to terminal(s), and the transmitting terminal may transmit a signaling message including information element #1 to receiving terminal(s). The information elements defined in Table 5 may be transmitted through different signaling messages (e.g., RRC signaling messages, MAC signaling messages, PHY signaling messages). For example, a first communication node may transmit an RRC signaling message including information elements #2, #3, #4, #5, #6, #7, and/or #8 to a second communication node, and the first communication node may transmit a MAC signaling message or a PHY signaling message including information element #1 to the second communication node.

The transmitting terminal may determine additional start position(s) based on the information element(s) defined in Table 5. If an LBT operation is successful in the first start position within a slot and SL communication (e.g., PSCCH/PSSCH transmission) is performed based on the success of the LBT operation, the transmitting terminal may not perform an LBT operation in additional start position(s). If the LBT operation fails in the first start position within a slot, the transmitting terminal may perform an LBT operation in additional start position(s) and may perform SL communication if the LBT operation is successful.

The receiving terminal may identify additional start position(s) based on the information element(s) defined in Table 5. The receiving terminal may perform a monitoring operation (e.g., blind decoding operation) to receive SL transmission (e.g., PSCCH/PSSCH transmission) based on the LBT operation in the first start position within the slot. If the SL transmission based on the LBT operation in the first start position within the slot is successfully received, the receiving terminal may not perform a monitoring operation to receive SL transmission based on an LBT operation in additional start position(s)within the slot. If reception of the SL transmission based on the LBT operation in the first start position within the slot fails, the receiving terminal may perform a monitoring operation to receive SL transmission based on an LBT operation in additional start position(s) within the slot. If reception of SL transmission(s) based on LBT operation(s) in all additional start position(s) within the slot fails, the receiving terminal may not expect to receive SL transmission from the transmitting terminal in the slot. In other words, SL transmission of the transmitting terminal may experience a delay of one slot.

To reduce the load and/or complexity of the receiving terminal's blind decoding operation for PSCCH, additional start position(s) may be fixed to specific symbol(s). When three PSSCH DMRS symbols are configured within a slot, additional start positions may be fixed to symbol(s) before and/or after the second PSSCH DMRS symbol. When four PSSCH DMRS symbols are configured within a slot, additional start position(s) may be fixed to symbol(s) before and/or after the second PSSCH DMRS symbol and/or symbol(s) before and/or after the third PSSCH DMRS symbol.

As another method, regardless of the number of PSSCH DMRS symbols configured within a slot, additional start position(s) may be fixed to symbol(s) other than PSSCH DMRS symbols within the slot. In this case, the symbol(s) in which additional start position(s) are configured may be defined as follows.
- An additional start position may be configured as a symbol after a PSCCH (e.g., first-stage SCI, last PSCCH symbol). If a symbol after the PSCCH is a PSSCH DMRS symbol, the additional start position may be configured as a symbol after the PSSCH DMRS symbol.
- An additional start position may be configured as the fourth symbol within a slot. When three or four PSSCH DMRS symbols are configured within a slot, the fifth symbol within the slot may be a PSSCH DMRS symbol. Accordingly, the fourth symbol, which is a symbol before the fifth symbol, may be configured as the additional start position.
- An additional start position may be configured as the sixth symbol within a slot. When three or four PSSCH DMRS symbols are configured within a slot, the fifth symbol within the slot may be a PSSCH DMRS symbol. Accordingly, the sixth symbol, which is a symbol after the fifth symbol, may be configured as the additional start position.
- An additional start position may be configured as the seventh symbol within a slot. When three or four PSSCH DMRS symbols are configured within a slot, the eighth symbol within the slot may be a PSSCH DMRS symbol. Accordingly, the seventh symbol, which is a symbol before the eighth symbol, may be configured as the additional start position.
- An additional start position may be configured as the ninth symbol within a slot. When three or four PSSCH DMRS symbols are configured within a slot, the eighth symbol within the slot may be a PSSCH DMRS symbol. Accordingly, the ninth symbol, which is a symbol after the eighth symbol, may be configured as the additional start position.

As another method, additional start position(s) may be configured as symbol(s) before and/or after a symbol offset from a PSSCH DMRS symbol. The symbol offset may be configured for terminals through signaling.

### [Method 2: Additional start position(s) may be configured in PSSCH DMRS symbol(s)]

When four PSSCH DMRS symbols are configured within a slot, additional start position(s) may be configured as the second PSSCH DMRS symbol and/or the third PSSCH DMRS symbol.

When four PSSCH DMRS symbols are configured within a slot and an additional start position is configured as the first PSSCH DMRS symbol, a time interval between the start positions (e.g., the first start position and the additional start position) may be short. If the time interval between the start positions is short, a terminal may be unable to perform an LBT operation in the second start position (e.g., additional start position) when an LBT operation fails in the first start position. In this case, SL communication may experience a delay of one slot.

When four PSSCH DMRS symbols are configured within a slot and an additional start position is configured as the last PSSCH DMRS symbol, a period from the additional start position to an end time of the slot may be short. In this case, a resource and/or processing time for PSCCH/PSSCH transmission after an LBT operation succeeds in the additional start position may be insufficient.

Considering the above-described issues, it may be preferable to configure additional start position(s) as the remaining PSSCH DMRS symbol(s), excluding the first PSSCH DMRS symbol and the last PSSCH DMRS symbol, among PSSCH DMRS symbols. When four PSSCH DMRS symbols are configured within a slot, the remaining PSSCH DMRS symbol(s), which serve as the basis for configuring additional start position(s), may be the second PSSCH DMRS symbol and/or the third PSSCH DMRS symbol. The additional start position(s) may be configured as the second PSSCH DMRS symbol and/or the third PSSCH DMRS symbol.

When three PSSCH DMRS symbols are configured within a slot and an additional start position is configured as the first PSSCH DMRS symbol, a time interval between the start positions (e.g., the first start position and the additional start position) may be short. If the time interval between the start positions is short, the terminal may be unable to perform an LBT operation in the second start position (e.g., additional start position) when an LBT operation fails in the first start position. In this case, SL communication may experience a delay of one slot.

When three PSSCH DMRS symbols are configured within a slot and an additional start position is configured as the last PSSCH DMRS symbol, a period from the additional start position to an end time of the slot may be short. In this case, a resource and/or processing time for PSCCH/PSSCH transmission after an LBT operation succeeds in the additional start position may be insufficient.

Considering the above-described issues, it may be preferable to configure additional start position(s) as the remaining PSSCH DMRS symbol(s), excluding the first PSSCH DMRS symbol and the last PSSCH DMRS symbol, among PSSCH DMRS symbols. When three PSSCH DMRS symbols are configured within a slot, the remaining PSSCH DMRS symbol, which serves as the basis for configuring additional start positions, may be the second PSSCH DMRS symbol. The additional start position may be configured as the second PSSCH DMRS symbol.

When two PSSCH DMRS symbols are configured within a slot, the PSSCH DMRS symbols may be positioned at the front or rear symbols within a PSSCH duration. In this case, it may be difficult to configure additional start positions. Therefore, when two PSSCH DMRS symbols are configured within a slot, only one start position may be configured, and the start position may be the first symbol within the slot.

Considering the above-described situation, it may be preferable to configure three or four PSSCH DMRS symbols in SL-U communication. The base station may transmit *sl-PSSCH-DMRS-TimePatternList* indicating the configuration of three or four PSSCH DMRS symbols to terminal(s). The terminal(s) may determine that three or four PSSCH DMRS symbols are configured within a slot based on the *sl-PSSCH-DMRS-TimePatternList* received from the base station. The base station may transmit information elements defined in Table 6 to terminal(s) through signaling. The terminal(s) may identify additional start position(s) (e.g., additional start point(s)) based on the information elements received from the base station. As another method, a transmitting terminal may transmit information elements defined in Table 6 to receiving terminal(s) through signaling. The receiving terminal(s) may identify additional start position(s) (e.g., start point(s)) based on the information elements received from the transmitting terminal.

**[Table 6]**

| | Description |
|---|---|
| Information element #1 | Information element #1 indicates enabling or disabling use of additional start position(s) (e.g., multiple start position(s)). |
| Information element #2 | Information element #2 indicates the number of additional start position(s). |
| Information element #3 | Information element #3 indicates symbol(s) (e.g., symbol index(es)) in which additional start position(s) are configured. |
| Information element #4 | Information element #4 indicates that an additional start position is configured in the second PSSCH DMRS symbol. |
| Information element #5 | Information element #5 indicates that an additional start position is configured in the third PSSCH DMRS symbol. |
| Information element #6 | Information element #6 indicates a symbol offset between an initial start symbol and an additional start symbol. When the terminal is aware of the position of the initial start symbol, the terminal identifies the position of the additional start symbol based on the position of the initial start symbol and the symbol offset. |

The information element(s) defined in Table 6 may be configuration information for start position(s) (e.g., additional start position(s)). The start position(s) may be configured for each SL BWP. For example, start position(s) in a first SL BWP may be configured independently from start position(s) in a second SL BWP. The information element(s) defined in Table 6 may be transmitted by different communication nodes (e.g., base station and terminal). For example, the base station may transmit a signaling message including information elements #2, #3, #4, #5, and/or #6 to terminal(s), and the transmitting terminal may transmit a signaling message including information element #1 to receiving terminal(s). The information element(s) defined in Table 6 may be transmitted through different signaling messages (e.g., RRC signaling message, MAC signaling message, PHY signaling message). For example, a first communication node may transmit an RRC signaling message including information elements #2, #3, #4, #5, and/or #6 to a second communication node, and the first communication node may transmit a MAC signaling message or a PHY signaling message including information element #1 to the second communication node.

The transmitting terminal may identify additional start position(s) based on the information element(s) defined in Table 6. If an LBT operation is successful in the first start position within a slot and SL communication (e.g., PSCCH/PSSCH transmission) is performed based on the success of the LBT operation, the transmitting terminal may not perform an LBT operation in additional start position(s). If the LBT operation fails in the first start position within the slot, the transmitting terminal may perform an LBT operation in additional start position(s) and may perform SL communication if the LBT operation is successful.

The receiving terminal may identify additional start position(s) based on the information element(s) defined in Table 6. The receiving terminal may perform a monitoring operation (e.g., blind decoding operation) to receive SL transmission (e.g., PSCCH/PSSCH transmission) based on the LBT operation in the first start position within the slot. If the SL transmission based on the LBT operation in the first start position within the slot is successfully received, the receiving terminal may not perform a monitoring operation to receive SL transmission based on an LBT operation in additional start position(s) within the slot. If reception of SL transmission based on the LBT operation in the first start position within the slot fails, the receiving terminal may perform a monitoring operation to receive SL transmission based on an LBT operation in additional start position(s) within the slot. If reception of SL transmission(s) based on LBT operation(s) in all additional start position(s) within the slot fails, the receiving terminal may not expect to receive SL transmission from the transmitting terminal in the slot. In other words, SL transmission of the transmitting terminal may be delayed until the next slot.

To reduce a load and/or complexity of the receiving terminal's blind decoding operation for PSCCH, additional start position(s) may be fixed to specific symbol(s). When three PSSCH DMRS symbols are configured within a slot, the additional start position may be fixed to the second PSSCH DMRS symbol. When four PSSCH DMRS symbols are configured within a slot, additional start position(s) may be fixed to the second PSSCH DMRS symbol and/or the third PSSCH DMRS symbol.

As another method, regardless of the number of PSSCH DMRS symbols configured within a slot, additional start position(s) may be fixed to certain symbol(s) within the slot. In this case, the certain symbol(s) in which additional start position(s) are configured may be defined as follows.
- An additional start position may be configured as a PSSCH DMRS symbol after a PSCCH (e.g., first-stage SCI, last PSCCH symbol).
- An additional start position may be configured as the fifth symbol within a slot. When three or four PSSCH DMRS symbols are configured within a slot, the fifth symbol within the slot may be a PSSCH DMRS symbol. Accordingly, the fifth symbol may be configured as the additional start position.
- An additional start position may be configured as the eighth symbol within a slot. When three or four PSSCH DMRS symbols are configured within a slot, the eighth symbol within the slot may be a PSSCH DMRS symbol. Accordingly, the eighth symbol may be configured as the additional start position.

Meanwhile, for an AGC operation at a receiving terminal, a transmitting terminal may transmit a copy of data (e.g., information, signal) to be transmitted in the next symbol after a symbol (e.g., additional start symbol) configured as an additional start position in the additional start symbol. If the additional start symbol (e.g., the symbol configured as the additional start position) is a PSSCH DMRS symbol, the transmitting terminal may transmit a copy of data (e.g., information, signal) to be transmitted in the next symbol after the additional start symbol in the additional start symbol. In this case, the copy of the data to be transmitted in the next symbol may be transmitted in frequency resource(s) of the additional start symbol (e.g., PSSCH DMRS symbol), excluding one or more frequency resources to which a PSSCH DMRS is mapped according to a comb type. In this case, the PSSCH DMRS and the data (e.g., part of the data) to be transmitted in the next symbol may be transmitted in the additional start symbol. According to the above-described operations, AGC performance at the receiving terminal may be improved.

In SL-U communication, multiple start positions (e.g., multiple start symbols) may be configured. Among the multiple start symbols, the first start symbol may be referred to as an initial start symbol, a default start symbol, or a first start symbol. The initial start symbol may be configured as the first symbol within a slot. Alternatively, the initial start symbol may be configured as one of the first to eighth symbols within the slot. The remaining start symbol(s), other than the initial start symbol among the multiple start symbols, may be referred to as additional start symbol(s). The additional start symbols may be referred to as a second start symbol, a third start symbol, and so on.

To perform an AGC operation in each start symbol, a copy of data to be transmitted in the next symbol after the start symbol may be transmitted in the start symbol. In this case, an overlapping issue between an AGC symbol (or the next symbol of the AGC symbol) and a PSSCH DMRS symbol may be considered. The AGC symbol may be a start symbol. When a duration (e.g., period including one or more symbols) for SL transmission within a slot is short, two or more start symbols may not be configured within the slot. The number of PSSCH DMRS symbols, position(s) of PSSCH DMRS symbols, and/or the number of symbols used for SL communication within a slot may be configured through higher-layer signaling.

A base station may transmit a signaling message including *sl-LengthSymbols,* which indicates the number of symbols used for SL communication within a slot, to terminal(s). The terminal(s) may determine the number of symbols used for SL communication based on *sl-LengthSymbols* included in the signaling message received from the base station. *sl-LengthSymbols* may indicate that 7 symbols, 8 symbols, 9 symbols, 10 symbols, 11 symbols, 12 symbols, 13 symbols, or 14 symbols are used for SL communication.

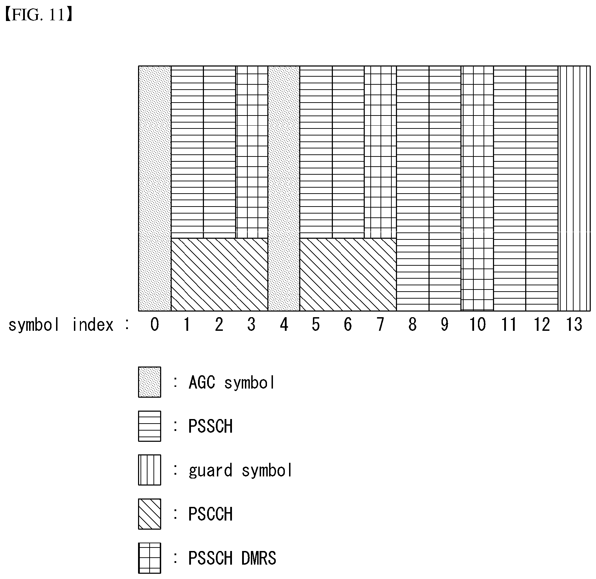

FIG. 11 is a conceptual diagram illustrating a second exemplary embodiment of LBT operation in SL-U communication.

As shown in FIG. 11, in SL-U communication, the number and/or positions of PSSCH DMRS symbols may be configured in consideration of the number and/or positions of start symbols. If two start symbols are configured within a slot and the two start symbols are a symbol #0 and symbol #4, three PSSCH DMRS symbols may be configured, and the three PSSCH DMRS symbols may be a symbol #2, symbol #7, and symbol #10. The start symbols may be AGC symbols. The first PSSCH DMRS symbol may be positioned between the start symbols, and the second PSSCH DMRS symbol and the third PSSCH DMRS symbol may be positioned after the additional start symbol (e.g., symbol #4).

The two start symbols may be configured by the base station. For example, the base station may transmit configuration information of the start symbols to terminal(s) through signaling. The terminal(s) may identify the start symbol(s) based on the configuration information received from the base station. In other words, the terminal(s) may identify that the symbol #0 and symbol #4 are configured as the start symbols based on the configuration information.

The transmitting terminal may perform an LBT operation in the symbol #0 (e.g., initial start symbol) and may perform SL transmission if the LBT operation is successful. If the LBT operation fails in the symbol #0, the transmitting terminal may perform an LBT operation in the symbol #4 (e.g., additional start symbol). If the LBT operation is successful in the symbol #4, the transmitting terminal may perform SL transmission. If the LBT operation fails in the symbol #4, the transmitting terminal may not perform SL transmission in the current slot. In other words, SL transmission may be delayed until the next slot.

The receiving terminal may perform a monitoring operation for SL transmission based on the LBT operation in the symbol #0. If SL transmission based on the LBT operation in the symbol #0 is successfully received, the receiving terminal may not perform a monitoring operation for SL transmission based on the LBT operation in the symbol #4. If reception of SL transmission based on the LBT operation in the symbol #0 fails, the receiving terminal may perform a monitoring operation for SL transmission based on the LBT operation in the symbol #4.

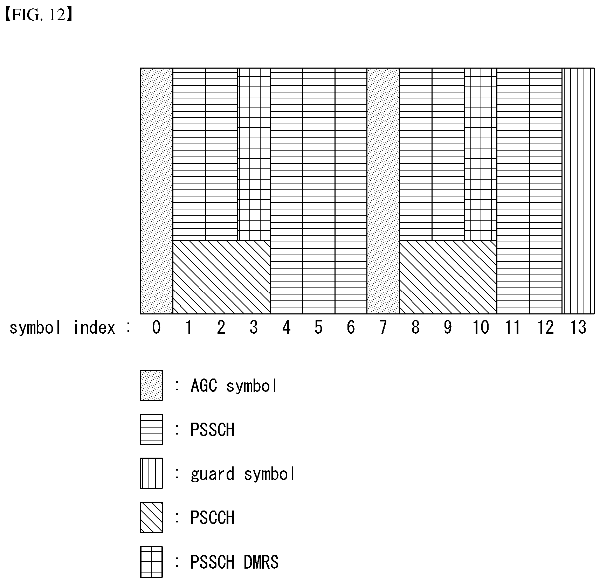

FIG. 12 is a conceptual diagram illustrating a third exemplary embodiment of LBT operation in SL-U communication.

As shown in FIG. 12, in SL-U communication, the number and/or positions of PSSCH DMRS symbols may be configured in consideration of the number and/or positions of start symbols. If two start symbols are configured within a slot and the two start symbols are a symbol #0 and symbol #7, two PSSCH DMRS symbols may be configured, and the two PSSCH DMRS symbols may be a symbol #3 and symbol #10. The start symbols may be AGC symbols. The first PSSCH DMRS symbol may be positioned between the start symbols, and the second PSSCH DMRS symbol may be positioned after the additional start symbol (e.g., symbol #7).

The two start symbols may be configured by the base station. For example, the base station may transmit configuration information of the start symbols to terminal(s) through signaling. The terminal(s) may identify the start symbols based on the configuration information received from the base station. In other words, the terminal(s) may identify that the symbol #0 and symbol #7 are configured as the start symbols based on the configuration information.

The transmitting terminal may perform an LBT operation in the symbol #0 (e.g., initial start symbol) and may perform SL transmission if the LBT operation is successful. If the LBT operation fails in the symbol #0, the transmitting terminal may perform an LBT operation in the symbol #7 (e.g., additional start symbol). If the LBT operation is successful in the symbol #7, the transmitting terminal may perform SL transmission. If the LBT operation fails in the symbol #7, the transmitting terminal may not perform SL transmission in the current slot. In other words, SL transmission may be delayed until the next slot.

The receiving terminal may perform a monitoring operation for SL transmission based on the LBT operation in the symbol #0. If SL transmission based on the LBT operation in the symbol #0 is successfully received, the receiving terminal may not perform a monitoring operation for SL transmission based on the LBT operation in the symbol #7. If reception of SL transmission based on the LBT operation in the symbol #0 fails, the receiving terminal may perform a monitoring operation for SL transmission based on the LBT operation in the symbol #7.

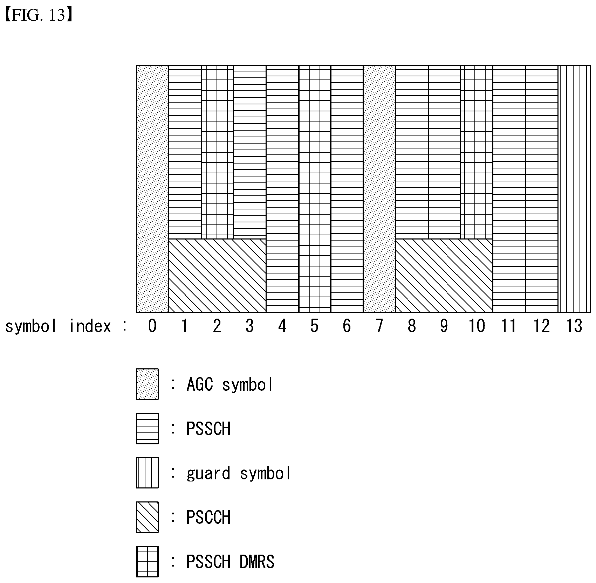

FIG. 13 is a conceptual diagram illustrating a fourth exemplary embodiment of LBT operation in SL-U communication.

As shown in FIG. 13, in SL-U communication, the number and/or positions of PSSCH DMRS symbols may be configured in consideration of the number and/or positions of start symbols. If two start symbols are configured within a slot and the two start symbols are a symbol #0 and symbol #7, three PSSCH DMRS symbols may be configured, and the three PSSCH DMRS symbols may be a symbol #2, symbol #5, and symbol #10. The start symbols may be AGC symbols. The first PSSCH DMRS symbol and the second PSSCH DMRS symbol may be positioned between the start symbols, and the third PSSCH DMRS symbol may be positioned after the additional start symbol (e.g., symbol #7).

The two start symbols may be configured by the base station. For example, the base station may transmit configuration information of the start symbols to terminal(s) through signaling. The terminal(s) may identify the start symbols based on the configuration information received from the base station. In other words, the terminal(s) may identify that the symbol #0 and symbol #7 are configured as the start symbols based on the configuration information.

The transmitting terminal may perform an LBT operation in the symbol #0 (e.g., initial start symbol) and may perform SL transmission if the LBT operation is successful. If the LBT operation fails in the symbol #0, the transmitting terminal may perform an LBT operation in the symbol #7 (e.g., additional start symbol). If the LBT operation is successful in the symbol #7, the transmitting terminal may perform SL transmission. If the LBT operation fails in the symbol #7, the transmitting terminal may not perform SL transmission in the current slot. In other words, SL transmission may be delayed until the next slot.

The receiving terminal may perform a monitoring operation for SL transmission based on the LBT operation in the symbol #0. If SL transmission based on the LBT operation in the symbol #0 is successfully received, the receiving terminal may not perform a monitoring operation for SL transmission based on the LBT operation in the symbol #7. If reception of SL transmission based on the LBT operation in the symbol #0 fails, the receiving terminal may perform a monitoring operation for SL transmission based on the LBT operation in the symbol #7.

In SL-U communication, an LBT period may be configured in a time unit other than a symbol unit. The above-described exemplary embodiments may be applied in the same or a similar manner to an LBT period configured in a different time unit.

In the above-described SL-U communication, information on the operation, configuration, and/or application of the LBT period (e.g., LBT symbol) may be configured specifically, independently, or commonly based on at least one of a resource pool, service type, priority, whether a power-saving operation is performed, QoS parameters (e.g., reliability, latency), cast type, or terminal type (e.g., vehicle (V)-UE or pedestrian (P)-UE). The above-described configuration may be performed by the network and/or the base station. Alternatively, the above-described information may be implicitly determined based on predefined parameter(s).

In the above-described exemplary embodiments, whether each method (e.g., each rule) is applied may be configured based on at least one of a condition, a combination of conditions, parameter, or a combination of parameters. Whether each method is applied may be configured by the network and/or the base station. Whether each method is applied may be configured specifically for a resource pool or service. Alternatively, whether each method is applied may be configured through PC5-RRC signaling between terminals.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a first user equipment (UE), comprising:
receiving configuration information of start symbol(s) from a base station;
identifying a plurality of start symbols based on the configuration information;
performing a first listen before talk (LBT) operation in a first start symbol among the plurality of start symbols within a first slot; and
performing a second LBT operation in a second start symbol among the plurality of start symbols within the first slot, based on a failure of the first LBT operation in the first start symbol,
wherein each of the first LBT operation and the second LBT operation is performed for sidelink (SL) transmission to a second UE, and the second start symbol is located after the first start symbol in time domain.

2. The claim according to claim 1, wherein within the first slot, the second start symbol is configured as a symbol other than a physical sidelink shared channel (PSSCH) demodulation reference signal (DMRS) symbol, and the PSSCH DMRS symbol is a symbol in which a DMRS for demodulation of a PSSCH is transmitted.

3. The claim according to claim 2, wherein within the first slot, the second start symbol is configured as a symbol before or after the PSSCH DMRS symbol.

4. The claim according to claim 1, wherein within the first slot, the second start symbol is configured as a PSSCH DMRS symbol.

5. The claim according to claim 1, wherein within the first slot, PSSCH DMRS symbol(s) are configured considering at least one of a number or positions of the plurality of start symbols.

6. The claim according to claim 1, wherein when the second LBT operation is successful, the SL transmission is performed within the first slot, and when the second LBT operation fails, the SL transmission is performed in a second slot after the first slot.

7. The claim according to claim 1, wherein a copy of data to be transmitted in a next symbol of the second start symbol is transmitted in the second start symbol.

8. The claim according to claim 1, wherein the configuration information includes information indicating a position of the first start symbol and information indicating a position of the second start symbol.

9. The claim according to claim 8, wherein the information indicating the position of the second start symbol is a symbol offset between the first start symbol and the second start symbol.

10. The claim according to claim 1, wherein when a use of the plurality of start symbols is enabled, the second LBT operation is performed in the second start symbol, and when the use of the plurality of start symbols is disabled, the second LBT operation is not performed in the second start symbol.

11. A method of a second user equipment (UE), comprising:
receiving configuration information of start symbol(s) from a base station;
identifying a plurality of start symbols based on the configuration information;
performing a first monitoring operation for sidelink (SL) transmission of a first UE according to a first listen before talk (LBT) operation in a first start symbol among the plurality of start symbols within a first slot; and
in response to a reception failure of the SL transmission according to the first LBT operation, performing a second monitoring operation for the SL transmission of the first UE according to a second LBT operation in a second start symbol among the plurality of start symbols within the first slot,
wherein the second start symbol is located after the first start symbol in time domain.

12. The claim according to claim 11, wherein within the first slot, the second start symbol is configured as a symbol other than a physical sidelink shared channel (PSSCH) demodulation reference signal (DMRS) symbol, and the PSSCH DMRS symbol is a symbol in which a DMRS for demodulation of a PSSCH is transmitted.

13. The claim according to claim 12, wherein within the first slot, the second start symbol is configured as a symbol before or after the PSSCH DMRS symbol.

14. The claim according to claim 11, wherein within the first slot, the second start symbol is configured as a PSSCH DMRS symbol.

15. The claim according to claim 11, wherein within the first slot, PSSCH DMRS symbol(s) are configured considering at least one of a number or positions of the plurality of start symbols.

16. The claim according to claim 11, wherein when reception of the SL transmission according to the second LBT operation fails, the second UE does not expect to receive the SL transmission in the first slot, and the SL transmission is delayed to a second slot after the first slot.

17. The claim according to claim 11, wherein a copy of data to be received in a next symbol of the second start symbol is received in the second start symbol.

18. The claim according to claim 11, wherein the configuration information includes information indicating a position of the first start symbol and information indicating a position of the second start symbol.

19. The claim according to claim 18, wherein the information indicating the position of the second start symbol is a symbol offset between the first start symbol and the second start symbol.

20. The claim according to claim 11, wherein when a use of the plurality of start symbols is enabled, the second LBT operation is performed in the second start symbol, and when the use of the plurality of start symbols is disabled, the second LBT operation is not performed in the second start symbol.
